# EUROPEAN PATENT SPECIFICATION

(11) **EP 3 354 627 B1**
(45) Date of publication and mention of the grant of the patent: **05.05.2021**
(21) Application number: 18153555.0
(22) Date of filing: 26.01.2018
(51) Int. Cl.: C03B 37/014, C03B 19/14

(54) **METHOD OF PRODUCING POROUS QUARTZ GLASS PREFORM**
VERFAHREN ZUR HERSTELLUNG VON PORÖSER QUARZGLASVORFORM
PROCÉDÉ DE PRODUCTION DE PRÉFORME DE VERRE DE QUARTZ POREUX

(30) Priority: 27.01.2017 JP 2017012788
(43) Date of publication of application: 01.08.2018
(73) Proprietor: Shin-Etsu Quartz Products Co., Ltd., Tokyo 160-0023 (JP)
(72) Inventor: SUMI, Kotaro, Sasebo-shi, Nagasaki 859-3153 (JP)
(74) Representative: Grünecker Patent- und Rechtsanwälte PartG mbB

(56) References cited:
- CA-A- 712 238
- JP-A- H07 256 089
- JP-A- S58 135 147
- JP-A- 2014 040 350
- JP-A- 2015 000 169

## Description

### BACKGROUND OF THE INVENTION

### 1. Field of the Invention

The present invention relates to a method of producing a porous quartz glass preform, and the use of a seed rod for the production of the porous quartz glass preform.

### 2. Description of the Related Art

Synthetic quartz glass is widely used in the optical, semiconductor, and chemical industries, and is often used particularly as a lens material for a projection or exposure system in microlithography, or a material for a semiconductor manufacturing jig or an optical fiber.

For production of a synthetic quartz glass ingot, in general, a cylindrical porous quartz glass preform (soot body) is produced, and the resultant porous quartz glass preform is sintered to transparency. A vapor phase axial deposition (VAD) method is known as a production method for the soot body. In the method, the soot body is produced by depositing a silicon-containing raw material on a surface of a rotating seed rod while converting the raw material into silica fine particles through flame hydrolysis or thermal decomposition.

In production of the soot body by the VAD method, the silica fine particles are deposited on a starting material (seed rod) and the seed rod is pulled up while being rotated, to thereby grow the soot body in an axial direction. The soot body is supported by the seed rod so as to hang therefrom, and hence a mechanical strength at a bonding site between the seed rod and the soot body is important. The soot body is increased in its own weight in the case of a quartz ingot having a large size and a heavy weight, and hence a higher mechanical strength is required. Various technologies have been invented in order to achieve an increase in mechanical strength, but no method has achieved such increase inexpensively without an increase in production cost.

In Patent Document 1, in order to increase a fixation force so that a soot body produced by a VAD method is prevented from falling by its own weight, there is a description of a method involving, at the time of production of the soot body, heating a bonding site between a seed rod and the soot body with a heater or the like in a soot body production reaction device or at an outside of the device to semi-vitrify the bonding site, to thereby increase a mechanical strength. However, the arrangement of the heater in the reaction device or at the outside of the device entails an increase in device cost and a reduction in maintenance property, and is not easy when regular production is performed.

In Patent Document 1, there is a description of "in order to increase adhesiveness, it is also conceived that a temperature at the time of a flame hydrolysis reaction with a burner is increased by increasing the supply amount of hydrogen, to thereby form an oxide powder rod into a semi-vitrified state, but it is not technically established what level of amount is set as the amount of hydrogen," (in the upper left column on page 2 of Specification of Patent Document 1). The present invention is directed to providing a method for easily and stably achieving semi-vitrification with oxyhydrogen flame, which has been described to be not established in Patent Document 1.

In addition, in Patent Document 2, as a method for increasing a connecting strength between a seed rod and a soot body, there is a description of a method involving forming a molded body on an outside of a support rod formed of a quartz-based material by a powder molding method, and using the resultant as the seed rod. In Patent Document 2, as a mode of operation, there is described that irregularities corresponding to the dimensions of silica powder particles serving as a material for forming the powder molded body are generated, and a mechanical strength is increased by an increase in contact area with the soot body. However, when the powder molding method is performed on the seed rod, the cost, time, and labor are considerably increased.

Further, in the method described in Patent Document 2, in view of the shape of the seed rod, the soot body is obtained by depositing the silica fine particles on the powder molded body, and hence the soot body grows in accordance with the shape of the powder molded body in its early stage of growth. Accordingly, when a step or a protrusion is formed in the seed rod with the aim of increasing the contact area, the soot body is formed into a shape remarkably reflecting the shape of the seed rod along with its growth. This contrarily causes cracks owing to a large variation in density in the soot body.

In addition, in Patent Document 3, there is a proposal of a cylindrical seed rod having at least one annular groove. However, a number of cracks occur in the seed rods having the shapes described in Patent Documents 2 and 3 owing to excessively large changes in their shapes, and these seed rods cannot be stably produced without a skilled technique for a production operation.

Patent Document 4 relates to the production of optical fibers using a starting material of a quartz glass rod prepared by stretching one end of a growing porous preform in the form of a tapered conical form.

### Prior Art Documents

### Patent Document

Patent Document 1: JP 57-200236 A
Patent Document 2: JP 06-183770 A
Patent Document 3: JP 2011-256069 A
Patent Document 4: JP S58 135147 A

### SUMMARY OF THE INVENTION

The present invention has been made in view of the above-mentioned problems of the related art, and an object of the present invention is to provide a seed rod capable of easily and inexpensively ensuring a mechanical strength enough to withstand a heavy weight in a VAD method, and a method of producing a porous quartz glass preform including using the seed rod, and a method of producing a quartz glass ingot.

In order to achieve the above-mentioned object, according to one embodiment of the present invention, there is provided a method of producing a porous quartz glass preform having a weight of 35 kg or more, said method comprising depositing glass fine particles on a rotating seed rod to produce a porous quartz glass preform,
at least a surface of a tip end portion of a deposition portion of the seed rod on which the glass fine particles are to be deposited being subjected to roughening treatment,
wherein a surface of the seed rod subjected to the roughening treatment has a surface roughness Rz, measured with a surface roughness meter based on JIS B 0601:2001, of 35 µm or more, and
wherein a surface of the seed rod subjected to the roughening treatment has irregularities having a pitch of 1 mm or less and a depth of 0.5 mm or more and 1.5 mm or less.

It is suitable that the seed rod includes a cylindrical seed rod including a semi-spherical portion having a semi-spherical tip end, and at least a surface of the semi-spherical portion be subjected to the roughening treatment.

The porous quartz glass preform obtained by the above-mentioned production method can be used for producing a quartz glass ingot.

According to one embodiment of the present invention, a seed rod is used for the above-mentioned production method, in which at least a surface of a tip end portion of a deposition portion of the seed rod on which the glass fine particles are to be deposited is subjected to the roughening treatment as disclosed above.

According to the present invention, the following remarkable effects are exhibited: there can be provided the seed rod capable of easily and inexpensively ensuring a mechanical strength enough to withstand a heavy weight in a VAD method, and the method of producing a porous quartz glass preform including using the seed rod.

### BRIEF DESCRIPTION OF THE DRAWINGS

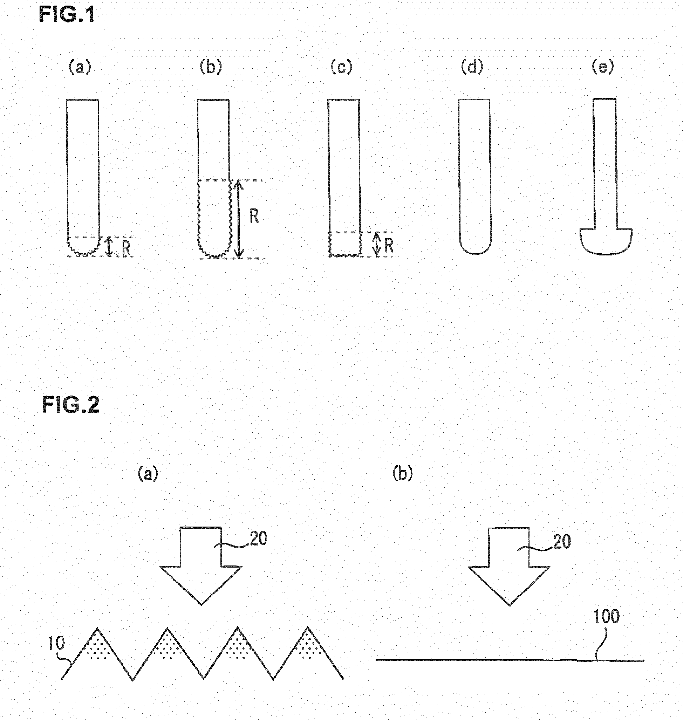

FIG. 1(a), FIG. 1(b), FIG. 1(c), FIG. 1(d), and FIG. 1(e) are each a schematic explanatory view for illustrating an example of a shape of a seed rod, in which FIG. 1(a), FIG. 1(b), and FIG. 1(c) are each a view for illustrating an example of a seed rod of the present invention, and FIG. 1(d) and FIG. 1(e) are each a view for illustrating an example of a seed rod of the related art.
FIG. 2(a) and FIG. 2(b) are each a schematic explanatory view for illustrating heat concentration on a heated surface, in which FIG. 2(a) is a view for illustrating an example of a surface having been subjected to roughening treatment, and FIG. 2(b) is a view for illustrating an example of a smooth surface.

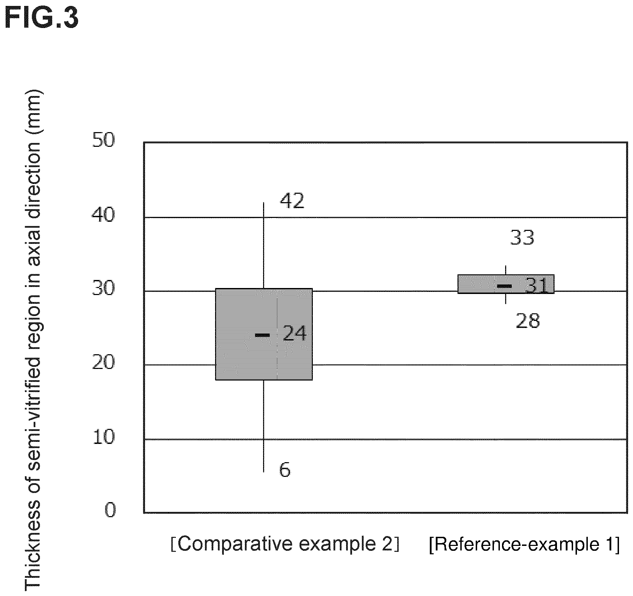

FIG. 3 is a graph for showing the results of Reference Example 1 and Comparative Example 2.

### DETAILED DESCRIPTION OF THE PREFERRED EMBODIMENTS

Embodiments of the present invention are described below, but those embodiments are described as examples, and hence it is understood that various modifications may be made thereto without departing from the technical spirit of the present invention. In the illustrated examples, the same members are represented by the same reference symbols.

The present invention is directed to providing a method of producing a porous quartz glass preform including depositing glass fine particles on a rotating seed rod, the method including using a seed rod in which at least a surface of a tip end portion of a deposition portion on which the glass fine particles are to be deposited is subjected to roughening treatment.

FIG. 1(a), FIG. 1(b), FIG. 1(c), FIG. 1(d), and FIG. 1(e) are each a schematic explanatory view for illustrating an example of a shape of a seed rod, in which FIG. 1(a) to FIG. 1(c) are each a view for illustrating an example of a seed rod of the present invention, and FIG. 1(d) and FIG. 1(e) are each a view for illustrating an example of a seed rod of the related art. FIG. 2(a) and FIG. 2(b) are each a schematic explanatory view for illustrating heat concentration on a heated surface, in which FIG. 2(a) is a view for illustrating an example of a surface having been subjected to roughening treatment, and FIG. 2(b) is a view for illustrating an example of a smooth surface.

As illustrated in FIG. 2(a), when a surface 10 having been subjected to roughening treatment is subjected to heating 20, its sharp apex portion is locally heated to high temperature because of having a large specific surface area per unit volume and being easily increased in temperature. Meanwhile, in the case of a smooth surface 100, heat is dispersed, and hence a local high temperature portion is not generated [FIG. 2(b)].

An example of a seed rod used in the present invention including a roughened region R in a deposition portion for glass fine particles is illustrated in each of FIG. 1(a) to FIG. 1(c). As illustrated in FIG. 1(a) to FIG. 1(c) and FIG. 2(a), when, in the seed rod to be used in production of a soot body by a VAD method, a surface of the deposition region for silica fine particles is roughened, an apex of a fine convexity is locally heated to high temperature at the time of heating with oxyhydrogen flame. The silica fine particles each become a semi-vitrified state almost at the same time as the silica fine particles are deposited on the fine portion locally heated to high temperature. The portion in a semi-vitrified state has a higher thermal conductivity than a portion on which only the silica fine particles are deposited, and a semi-vitrified region is expanded from the portion in a semi-vitrified state as a core. Through repetition of such operations, a bonding site in a semi-vitrified state can be easily formed between the soot body and the seed rod, and hence a mechanical strength at an interface between the seed rod and the soot body can be increased.

In order to increase the surface area of the deposition portion, for example, it is considered to be effective to increase a contact surface or effect a shape change, such as a protrusion or a groove, as in Patent Documents 2 and 3. Such method is effective, but when a heavy object is to be produced, a risk of its falling cannot be completely avoided only by the method. Moreover, the shape change also has an adverse effect as described later. Therefore, it is important to form a semi-vitrified region capable of supporting a heavy weight.

FIG. 1(d) is an illustration of a related-art cylindrical seed rod having a semi-spherical tip end which is entirely formed of a smooth surface. In the case of such seed rod in which the surface of a deposition portion is not rough and is smooth, heat is dispersed and a local high temperature portion is not generated as illustrated in FIG. 2(b). In this connection, it is necessary to increase a temperature to a temperature at which the entirety of a semi-spherical portion at the tip end of the seed rod or the entirety of the semi-spherical portion and a side surface can be semi-vitrified. Therefore, large amounts of a combustion gas and a combustion-supporting gas are required. Further, there is no core for forming a semi-vitrified region, and hence the amount of the semi-vitrified region to be spontaneously generated and its timing from the beginning of a deposition step are not stabilized, resulting in extremely poor production stability.

FIG. 1(a) to FIG. 1(c) are each an illustration of the seed rod used in the present invention. FIG. 1(a) is an illustration of a cylindrical seed rod including a semi-spherical portion having a semi-spherical tip end, in which the entire surface of the semi-spherical portion is a roughened surface, FIG. 1(b) is an illustration of a cylindrical seed rod including a semi-spherical portion having a semi-spherical tip end, in which the entire surface of the semi-spherical portion and a lower side surface are each a roughened surface, and FIG. 1(c) is an illustration of a cylindrical seed rod including a flat tip end portion, in which the surface of the tip end portion and a lower side surface are each a roughened surface. In FIG. 1(a), FIG. 1(b), and FIG. 1(c), a roughened region is denoted by R.

The seed rod to be used in the present invention is a seed rod in which at least a surface of a tip end portion of a deposition portion on which glass fine particles are to be deposited is a roughened surface. The roughened region R of the seed rod may be formed only on the tip end portion of the deposition portion, or may be formed on the tip end portion and a lower side surface of the deposition portion or on the entire surface of the deposition portion. When the seed rod having a roughened surface at its bonding site to a soot body in an extremely early stage of a deposition step for the glass fine particles is used, a semi-vitrified state can be easily and stably formed, with the result that a mechanical strength can be increased with a layer of the semi-vitrified region so that the soot body is not escaped from the seed rod. The thickness t of the semi-vitrified region in an axial direction is particularly suitably 20 mm or more and 40 mm or less.

The shape of the seed rod is not particularly limited, but is preferably a simple shape, and is more preferably a cylindrical shape as illustrated in each of FIG. 1(a) to FIG. 1(c). The shape of the tip end portion of the cylindrical seed rod is suitably a semi-spherical shape, a shape formed of a smooth curve line without an abrupt change, or a flat surface.
When the cylindrical seed rod is used, the diameter of the cylindrical seed rod is not particularly limited, and may be appropriately selected depending on the size of a porous quartz glass preform to be produced, but is preferably from 30 mm to 100 mm.

FIG. 1(e) is an illustration of an example of a seed rod having a shape change. When the seed rod has a shape change, a large variation in density in the soot body occurs owing to its influence, and the soot body may have problems of falling or having cracks even without a weight problem. Therefore, in the present invention, the simple shape described above is suitable.
When the seed rod of the present invention is used, a semi-vitrified region capable of increasing the strength can be produced highly reproducibly and stably, and hence can be easily produced without any skilled technique.

A material for the seed rod used in the present invention is not particularly limited as long as the material has heat resistance, but examples thereof include quartz glass and fine ceramic, such as alumina, silicon carbide, or silicon nitride. Quartz glass is suitable.

In the seed rod used in the present invention, a method for the roughening treatment is not particularly limited, and the roughening treatment may be performed by, for example, grinding, cutting, forming, or blasting.

The surface of the seed rod having been subjected to the roughening treatment has a maximum height-surface roughness Rz of 35 µm or more, preferably 50 µm or more, more preferably 100 µm or more. When a seed rod having a surface roughness Rz of 35 µm or more is used, a variation in time from the beginning of the deposition step to the formation of the semi-vitrified region is reduced, and as well, the size of the semi-vitrified region is stabilized and its variation is significantly reduced. In addition, the occurrence rate of falling of the soot body can be significantly reduced.

In addition, a surface of the seed rod subjected to the roughening treatment has irregularities having a pitch of 1 mm or less and a depth of 0.5 mm or more and 1.5 mm or less.

A method of depositing the glass fine particles on the seed rod is not particularly limited, and may be a VAD method under known conditions. For example, a glass forming raw material, such as silicon tetrachloride, is hydrolyzed with oxyhydrogen flame to generate glass fine particles, and the glass fine particles are deposited on a deposition portion of a rotatably supported seed rod to form a semi-vitrified region. Thus, a porous quartz glass preform is produced.

A method of producing a porous quartz glass preform of the present invention is capable of easily and inexpensively ensuring a mechanical strength enough to withstand a heavy weight in a VAD method, and hence is suitable for production of a heavy porous quartz glass preform having a weight of more than 35 kg, and particularly suitable for production of a heavy porous quartz glass preform having a weight of 75 kg or more. According to the method of the present invention, the heavy porous quartz glass preform having a weight of 35 kg or more can be stably produced. In addition, the heavy porous quartz glass preform having a weight of 75 kg or more can be stably produced, which has hitherto been difficult. Further, even an extremely heavy porous quartz glass preform having a weight of 150 kg or more can be produced.

The porous quartz glass preform obtained by the method of producing a porous quartz glass preform of the present invention can be used for producing a quartz glass ingot. The method of producing a quartz glass ingot is not particularly limited as long as the porous quartz glass preform is used to be vitrified by a known method to produce a quartz glass ingot. A method including subjecting the porous quartz glass preform to dehydration treatment and sintering to transparency to produce a quartz glass ingot is suitable. In the porous quartz glass preform obtained by the method of producing a porous quartz glass preform of the present invention, falling is less liable to occur not only in the deposition step but also in a step subsequent to the deposition step, and hence the quartz glass ingot can be produced stably without falling.

### Examples

The present invention is hereinafter described in more detail by way of Examples, but it is needless to say that Examples are only illustrative and not intended to be interpreted in a limited way.

### (Example 1 - Reference)

A hemisphere of R50 was formed on a tip end of an intact cylindrical quartz rod (diameter: ϕ100 mm) by grinding processing, and the surface roughness Rz of the processed surface was set to 50 µm. Thus, a seed rod was produced. The surface roughness of the roughened surface of the seed rod was measured with a surface roughness meter (a compact surface roughness measurement instrument: Surftest SJ-210, manufactured by Mitutoyo Corporation) based on JIS B 0601:2001.

A soot body was produced by using the seed rod and by a VAD method in which silicon tetrachloride as a raw material, hydrogen as a combustion gas, oxygen as a combustion-supporting gas, and nitrogen as a non-combustion gas were introduced in a concentric multi-tubular burner to be subjected to a hydrolysis reaction in combustion flame. Thus, a semi-vitrified region was produced. The details of the production conditions are shown in Table 1.

**Table 1**

| | Raw material Silicon tetrachloride [g/min] | Combustion gas Hydrogen [SLM] | Combustion - supporting gas Oxygen [SLM] | Non-combustion gas Nitrogen [SLM] |
|---|---|---|---|---|
| Example 1* | 70 | 435 | 230 | 27 |
| Example 2* | 70 | 435 | 230 | 27 |
| Example 3* | 70 | 435 | 230 | 27 |
| Comparative Example 1 | 70 | 435 | 230 | 27 |
| Comparative Example 2 | 70 | 510 | 255 | 27 |
| Comparative Example 3 | 70 | 435 | 230 | 27 |

| | | | | |
|---|---|---|---|---|
| * Reference Examples | | | | |

Twenty soot bodies each having a weight excluding the weight of the seed rod of 40±5 kg were produced. As a result, the soot bodies were able to be produced stably without breakage or cracks and with less variation in thickness t of the semi-vitrified region: tₘᵢₙ=28 mm, tₘₐₓ=33 mm, and t_{center}=31 mm. The results of the thickness of the semi-vitrified region of the produced 20 soot bodies in an axial direction are shown in FIG. 3. The thickness of the semi-vitrified region in an axial direction was measured through image analysis on a growing tip end portion during the growth of the soot body with a CCD camera. In addition, a time from the beginning of a deposition step to the formation of the semi-vitrified region was from 7 minutes to 15 minutes, and had less variation. In addition, no soot body fell while being produced.

The soot body having been deposited was dehydrated through heating at from 1,000°C to 1,300°C, and further sintered to transparency through heating at from 1,300°C to 1,500°C. The soot body did not fall or break during its handling or those treatments. Thus, a synthetic quartz glass ingot having a weight of 40±5 kg was able to be obtained.

### (Example 2 - Reference)

A hemisphere of R50 was formed on a tip end of an intact cylindrical quartz rod (diameter: ϕ100 mm) by grinding processing, and further, irregularities having a pitch of 1 mm or less and a depth d of 0.5 mm or more and 1.5 mm or less were formed on the resultant semi-spherical portion through processing. Thus, a seed rod was produced.

A soot body was produced by using the seed rod and by a VAD method in which silicon tetrachloride as a raw material, hydrogen as a combustion gas, oxygen as a combustion-supporting gas, and nitrogen as a non-combustion gas were introduced in a concentric multi-tubular burner to be subjected to a hydrolysis reaction in combustion flame. Thus, a semi-vitrified region was produced. The details of the production conditions are shown in Table 1.

A soot body having a weight excluding the weight of the seed rod of 40 kg was produced. As a result, the soot body was able to be produced without breakage or cracks. Besides, the thickness t of the semi-vitrified region was 32 mm, which was substantially the same as in Reference-Example 1.

Further, the soot body was dehydrated and sintered to transparency in a heating furnace. The soot body did not fall or break during its handling or those treatments. Thus, a synthetic quartz glass ingot having a weight of 40 kg was able to be obtained.

### (Example 3 - Reference)

A hemisphere of R50 was formed on a tip end of an intact cylindrical quartz rod (diameter: ϕ100 mm) by grinding processing, and the surface roughness Rz of the processed surface was set to 100 µm. Thus, a seed rod was produced.

A soot body was produced by using the seed rod and by a VAD method in which silicon tetrachloride as a raw material, hydrogen as a combustion gas, oxygen as a combustion-supporting gas, and nitrogen as a non-combustion gas were introduced in a concentric multi-tubular burner to be subjected to a hydrolysis reaction in combustion flame. Thus, a semi-vitrified region was produced. The details of the production conditions are shown in Table 1.

A soot body having a weight excluding the weight of the seed rod of 40 kg was produced. As a result, the soot body was able to be produced without breakage or cracks. Besides, the thickness t of the semi-vitrified region was 34 mm, which was substantially the same as in Reference-Example 1. Further, similar soot bodies were produced five times. As a result, the thicknesses of their semi-vitrified regions ranged from 32 mm to 34 mm, and a variation in thickness was smaller than in Reference-Example 1.

Further, the soot body was dehydrated and sintered to transparency in a heating furnace. The soot body did not fall or break during its handling or those treatments. Thus, a synthetic quartz glass ingot having a weight of 40 kg was able to be obtained.

### (Example 4 - Reference)

A soot body having a weight excluding the weight of the seed rod of 80 kg was produced under exactly the same conditions as in Reference-Example 1 except that only the growth time was prolonged. As a result, the soot body was able to be produced without breakage or cracks.

Further, the soot body was dehydrated and sintered to transparency in a heating furnace. The soot body did not fall or break during its handling or those treatments. Thus, a synthetic quartz glass ingot having a weight of 80 kg was able to be obtained.

### (Example 5 - Reference)

A soot body having a weight excluding the weight of the seed rod of 160 kg was produced under exactly the same conditions as in Reference-Example 1 except that only the growth time was prolonged. As a result, the soot body was able to be produced without breakage or cracks.

Further, the soot body was dehydrated and sintered to transparency in a heating furnace. The soot body did not fall or break during its handling or those treatments. Thus, a synthetic quartz glass ingot having a weight of 160 kg was able to be obtained.

### (Example 6 - Reference)

A soot body having a weight excluding the weight of the seed rod of 80 kg was produced under exactly the same conditions as in Reference-Example 2 except that only the growth time was prolonged. As a result, the soot body was able to be produced without breakage or cracks.

Further, the soot body was dehydrated and sintered to transparency in a heating furnace. The soot body did not fall or break during its handling or those treatments. Thus, a synthetic quartz glass ingot having a weight of 80 kg was able to be obtained.

### (Example 7 - Reference)

A soot body having a weight excluding the weight of the seed rod of 160 kg was produced under exactly the same conditions as in Reference-Example 2 except that only the growth time was prolonged. As a result, the soot body was able to be produced without breakage or cracks.

Further, the soot body was dehydrated and sintered to transparency in a heating furnace. The soot body did not fall or break during its handling or those treatments. Thus, a synthetic quartz glass ingot having a weight of 160 kg was able to be obtained.

### (Example 8 - Reference)

A soot body having a weight excluding the weight of the seed rod of 80 kg was produced under exactly the same conditions as in Reference-Example 3 except that only the growth time was prolonged. As a result, the soot body was able to be produced without breakage or cracks.

Further, the soot body was dehydrated and sintered to transparency in a heating furnace. The soot body did not fall or break during its handling or those treatments. Thus, a synthetic quartz glass ingot having a weight of 80 kg was able to be obtained.

### (Example 9 - Reference)

A soot body having a weight excluding the weight of the seed rod of 160 kg was produced under exactly the same conditions as in Reference-Example 3 except that only the growth time was prolonged. As a result, the soot body was able to be produced without breakage or cracks.

Further, the soot body was dehydrated and sintered to transparency in a heating furnace. The soot body did not fall or break during its handling or those treatments. Thus, a synthetic quartz glass ingot having a weight of 160 kg was able to be obtained.

### (Comparative Example 1)

A seed rod which was formed of a quartz rod having the same size as in Example 1 and in which a semi-spherical portion at its tip end had a smooth surface having Rz of 3 µm or less was used as a seed rod. A soot body was produced by the same method as in Reference-Example 1 except that the seed rod was changed. As a result, a semi-vitrified region was not able to be produced with hydrogen and oxygen in the same amounts as in Reference-Example 1.

Two soot bodies each having a weight excluding the weight of the seed rod of 40±5 kg were produced. Each of the two soot bodies escaped from its bonding site to the seed rod. Therefore, no further experiment was performed.

### (Comparative Example 2)

A seed rod which was formed of a quartz rod having the same size as in Reference-Example 1 and in which a semi-spherical portion at its tip end had a smooth surface having Rz of 3 µm or less was used as a seed rod. A soot body was produced by the same method as in Reference-Example 1 except that the seed rod was changed and the amounts of hydrogen and oxygen were increased until a semi-vitrified region was generated. The details of the production conditions are shown in Table 1.

A semi-vitrified region was able to be produced by increasing the amounts of hydrogen and oxygen. Twenty soot bodies each having a weight excluding the weight of the seed rod of 40±5 kg were produced. As a result, one of the soot bodies escaped from its bonding site to the seed rod. A variation in thickness t of the semi-vitrified region was large: tₘᵢₙ=6 mm, tₘₐₓ=42 mm, and t_{center}=24 mm. The results of the thickness of the semi-vitrified region of the produced 20 soot bodies in an axial direction are shown in FIG. 3. The soot body having escaped is identical in thickness to a soot body having a thickness of the semi-vitrified region of tₘᵢₙ=6 mm, and is determined to lack strength owing to an extremely thin semi-vitrified region. In addition, also the production cost is increased owing to increases in amounts of hydrogen and oxygen to be used.

### (Comparative Example 3)

A seed rod having a shape change illustrated in FIG. 1(e) was used as a seed rod. A main body of the seed rod had a diameter of ϕ50, and a portion having a length of 50 mm from a tip end which was to be bonded to a soot body was formed into a hemisphere of R50. A soot body was produced by the same method as in Example 1 except that the seed rod was changed. The details of the production conditions are shown in Table 1. A bonding area was increased, but a step portion at which the seed rod abruptly changed in diameter became a larger step along with growth of the soot body. Cracks occurred in the soot body in its early stage of growth, and the soot body was not able to continue growing.

### Reference Signs List

10: surface subjected to roughening treatment, 20: heating, 100: smooth surface, R: roughened region

## Claims

1. A method of producing a porous quartz glass preform having a weight of 35 kg or more, said method comprising depositing glass fine particles on a rotating seed rod to produce a porous quartz glass preform,
at least a surface of a tip end portion of a deposition portion of the seed rod on which the glass fine particles are to be deposited being subjected to roughening treatment,
wherein a surface of the seed rod subjected to the roughening treatment has a surface roughness Rz, measured with a surface roughness meter based on JIS B 0601:2001, of 35 µm or more, and
wherein a surface of the seed rod subjected to the roughening treatment has irregularities having a pitch of 1 mm or less and a depth of 0.5 mm or more and 1.5 mm or less.

2. The method of producing a porous quartz glass preform according to claim 1, wherein:
the seed rod comprises a cylindrical seed rod comprising a semi-spherical portion having a semi-spherical tip end; and
at least a surface of the semi-spherical portion is subjected to the roughening treatment.

3. The method of any one of claims 1 or 2, further comprising the step of vitrifying the porous quartz glass preform to produce a quartz glass ingot.

4. Use of a seed rod for the production of a porous quartz glass preform having a weight of 35 kg or more,
wherein at least a surface of a tip end portion of a deposition portion of the seed rod on which the glass fine particles are to be deposited is subjected to roughening treatment,
wherein a surface of the seed rod subjected to the roughening treatment has a surface roughness Rz, measured with a surface roughness meter based on JIS B 0601:2001, of 35 µm or more, and
wherein a surface of the seed rod subjected to the roughening treatment has irregularities having a pitch of 1 mm or less and a depth of 0.5 mm or more and 1.5 mm or less.

## Patentansprüche

1. Verfahren zur Herstellung einer porösen Quarzglas-Vorform mit einem Gewicht von 35 kg oder mehr, wobei das Verfahren das Abscheiden von feinen Glaspartikeln auf einem rotierenden Keimstab umfasst, um eine poröse Quarzglas-Vorform herzustellen,
wobei mindestens eine Oberfläche eines Spitzenendabschnitts eines Ablagerungsabschnitts des Keimstabs, auf dem die feinen Glaspartikel abgelagert werden sollen, einer Aufrauhungs-Behandlung unterzogen wird,
wobei eine Oberfläche des der Aufrauhungs-Behandlung unterzogenen Keimstabs eine Oberflächenrauhigkeit Rz, berechnet auf der Grundlage von JIS B 0601:2001, von 35 µm oder mehr aufweist, und
wobei eine Oberfläche des der Aufrauhungs-Behandlung unterzogenen Keimstabs Unregelmäßigkeiten mit einem Abstand von 1 mm oder weniger und einer Tiefe von 0,5 mm oder mehr und 1,5 mm oder weniger aufweist.

2. Verfahren zur Herstellung einer porösen Quarzglas-Vorform nach Anspruch 1, wobei:
der Impfstab einen zylindrischen Impfstab umfasst, der einen halbkugelförmigen Abschnitt mit einem halbkugelförmigen Spitzenende aufweist; und
mindestens eine Oberfläche des halbkugelförmigen Abschnitts der Aufrauhungs-Behandlung unterzogen wird.

3. Verfahren nach einem der Ansprüche 1 oder 2, ferner umfassend den Schritt des Verglasens der porösen Quarzglas-Vorform zur Herstellung eines Quarzglas-Blocks.

4. Verwendung eines Keimstabs zur Herstellung einer porösen Quarzglas-Vorform mit einem Gewicht von 35 kg oder mehr,
wobei zumindest eine Oberfläche eines Spitzenendabschnitts eines Ablagerungsabschnitts des Keimstabs, auf dem die feinen Glaspartikel abgelagert werden sollen, einer Aufrauhungs-Behandlung unterzogen wurde,
wobei eine Oberfläche des der Aufrauhungs-Behandlung unterzogenen Keimstabs eine Oberflächenrauhigkeit Rz, berechnet auf der Grundlage von JIS B 0601:2001, von 35 µm oder mehr aufweist, und
wobei eine Oberfläche des der Aufrauhungs-Behandlung unterzogenen Keimstabs Unregelmäßigkeiten mit einem Abstand von 1 mm oder weniger und einer Tiefe von 0,5 mm oder mehr und 1,5 mm oder weniger aufweist.

## Revendications

1. Procédé de production d'une préforme en verre de quartz poreux ayant une masse de 35 kg ou plus, ledit procédé comprenant le dépôt de fines particules de verre sur une tige germinale en rotation pour produire une préforme en verre de quartz poreux,
au moins une surface d'une partie d'extrémité de pointe d'une partie de dépôt de la tige germinale sur laquelle les fines particules de verre doivent être déposées étant soumise à un traitement de rugosification,
une surface de la tige germinale soumise au traitement de rugosification ayant une rugosité de surface Rz, mesurée avec un rugosimètre de surface fondé sur la JIS B 0601:2001, de 35 µm ou plus, et
une surface de la tige germinale soumise au traitement de rugosification comportant des irrégularités ayant un pas de 1 mm ou moins et une profondeur de 0,5 mm ou plus et 1,5 mm ou moins.

2. Procédé de production d'une préforme en verre de quartz poreux selon la revendication 1, dans lequel :
la tige germinale comprend une tige germinale cylindrique comprenant une partie hémisphérique ayant une extrémité de pointe hémisphérique ; et
au moins une surface de la partie hémisphérique étant soumise au traitement de rugosification.

3. Procédé selon l'une quelconque des revendications 1 ou 2, comprenant en outre l'étape de vitrification de la préforme en verre de quartz poreux pour produire un lingot de verre de quartz.

4. Utilisation d'une tige germinale pour produire une préforme en verre de quartz poreux ayant une masse de 35 kg ou plus,
au moins une surface d'une partie d'extrémité de pointe d'une partie de dépôt sur la tige germinale sur laquelle les particules fines en verre doivent être déposées étant soumise à un traitement de rugosification,
une surface de la tige germinale soumise au traitement de rugosification ayant une rugosité de surface Rz, mesurée avec un rugosimètre de surface fondé sur la JIS B 0601:2001, de 35 µm ou plus, et
une surface de la tige germinale soumise au traitement de rugosification comportant des irrégularités ayant un pas de 1 mm ou moins et une profondeur de 0,5 mm ou plus et 1,5 mm ou moins.
